(19) Europäisches Patentamt
European Patent Office
Office européen des brevets

(11) **EP 0 906 372 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(21) Anmeldenummer: **97927136.8**

(22) Anmeldetag: **05.06.1997**

(51) Int Cl.$^7$: **C09B 67/28**, D06P 1/22

(86) Internationale Anmeldenummer:
**PCT/EP97/02912**

(87) Internationale Veröffentlichungsnummer:
**WO 97/48770 (24.12.1997 Gazette 1997/55)**

(54) **LEUKOKÜPENFARBSTOFF-PRÄPARATIONEN IN GRANULATFORM**

LEUCO VAT DYE PREPARATIONS IN GRANULAR FORM

PREPARATIONS DE LEUCO-COLORANT A CUVE SOUS FORME GRANULAIRE

(84) Benannte Vertragsstaaten:
**AT BE CH DE ES FR GB IE IT LI**

(30) Priorität: **18.06.1996 DE 19624208**

(43) Veröffentlichungstag der Anmeldung:
**07.04.1999 Patentblatt 1999/14**

(73) Patentinhaber: **DyStar Textilfarben GmbH & Co. Deutschland KG**
**65926 Frankfurt am Main (DE)**

(72) Erfinder:
• **GÄNG, Manfred**
**D-67240 Bobenheim-Roxheim (DE)**
• **KRÜGER, Rudolf**
**D-67273 Weisenheim (DE)**
• **MIEDERER, Peter**
**D-67454 Ha loch (DE)**
• **BECKMANN, Eberhard**
**D-67435 Neustadt (DE)**

(56) Entgegenhaltungen:
**DE-A- 4 327 221**  **DE-A- 19 502 968**
**DE-B- 1 071 653**  **DE-C- 235 047**
**FR-A- 417 071**  **GB-A- 884 027**
**GB-A- 916 519**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft neue Leukoküpenfarbstoff-Präparationen in Granulatform, enthaltend als wesentliche Bestandteile Leukoindigo oder Leukoformen von Indigoderivaten als Leukoküpenfarbstoff, Alkalimetallhydroxid und eine Mischung von 10 bis 100 Gew.-% einer $\alpha$-Hydroxy-$C_1$-$C_4$-alkylsulfinsäure, eines ihrer Salze oder Derivate und 0 bis 90 Gew.-% Hydrosulfit als Reduktionsmittel.

Weiterhin betrifft die Erfindung die Herstellung dieser Leukoküpenfarbstoff-Präparationen sowie ihre Verwendung zum Färben von cellulosehaltigem Textilmaterial.

Indigoide Farbstoffe (insbesondere Indigo selbst und dessen Bromderivate wie Brillantindigo) stellen seit langer Zeit bekannte Küpenfarbstoffe dar, die zum Färben von cellulosehaltigem Textilmaterial eingesetzt werden.

Zum Färben muß der wasserunlösliche Küpenfarbstoff zunächst durch Reduktion (Verküpen) in die wasserlösliche faseraffine Leukoform überführt werden, die dann nach dem Aufziehen auf das zu färbende Material wieder zum wasserunlöslichen Küpenfarbstoff-Pigment oxidiert wird.

Bei den bekannten Färbeverfahren wird der Küpenfarbstoff in einem dem Färbebad vorgelagerten Behälter in alkalischem Medium durch Zugabe von anorganischen Reduktionsmitteln wie Hydrosulfit (Natriumdithionit) und Thioharnstoffdioxid oder auch organischen Reduktionsmitteln wie Hydroxyaceton verküpt. Zusätzliche maschinenabhängige Anteile Reduktionsmittel werden während des Färbens verbraucht, da ein Teil des Leukofarbstoffs durch den Luftkontakt in den Luftgängen und an der Färbebadoberfläche oxidiert wird und wieder verküpt werden muß, weshalb auch dem Färbebad Reduktionsmittel zugesetzt werden muß.

Nachteilig bei der Verküpung des Küpenfarbstoffs mit den genannten Reduktionsmitteln ist die hohe Belastung des Färbeabwassers durch Sulfat (etwa 3500 bis 5000 mg/l, gemessen im Abwasser einer Indigofärberei) im Fall von Hydrosulfit bzw. durch Sauerstoff verbrauchende Substanzen (CSB-Werte von ca. 8000 mg Sauerstoff/1, gemessen im Abwasser einer Indigofärberei) im Fall von Hydroxyaceton.

Im Fall des Indigos werden auch pulverförmige feste bis pastenartige Präparationen der Leukoform beschrieben, die als Stabilisatoren Polyhydroxyverbindungen, wie Glycerin und insbesondere von Zuckern abgeleitete Verbindungen, z.B. Melasse, im Gemisch mit Alkali oder Zinkstaub enthalten (DE-PS 200 914 bzw. 235 047). Weiterhin ist aus der GB-PS-276 023 die Herstellung von pulverförmigen Leukofarbstoff-Präparationen durch Erhitzen eines Gemisches von nichtreduziertem Küpenfarbstoff, Glykol, Alkali, Hydrosulfit und Natriumsulfat und Trocknen im offenen Kessel und anschließendes Mahlen bekannt.

Im Fall der erstgenannten Präparationen kann zwar der Sulfatgehalt des Färbeabwassers wirkungsvoll gesenkt werden, jedoch sind diese Präparationen in der Regel schlecht dosierbar, da auch die trockenen Präparationen zum Verklumpen neigen, und sie lösen sich nur langsam im Färbebad. Im letztgenannten Fall wird die Sulfatbelastung sogar noch erhöht, da den Präparationen, die ohnehin schon das durch die Reduktion des Farbstoffs im oben beschriebenen Gemisch anfallende Sulfat enthalten, auch noch Sulfat zugesetzt wird.

Ferner ist aus den GB-A-916 519 und 884 027 die Verwendung von Hydroxyalkylsulfinsäuren zur Reduktion von Schwefelfarbstoffen bekannt.

Aus der WO-A-94/23114 ist ein Färbeverfahren bekannt, bei dem Indigo in vorreduzierter Form als bei der katalytischen Hydrierung erhaltene, wäßrige, alkalische Lösung eingesetzt wird. Auf diese Weise entfällt die Abwasserbelastung durch organische Substanzen, die Sulfatbelastung wird auf die durch den Luftkontakt während des Färbeprozesses erforderliche Menge Hydrosulfit reduziert. Nachteilig ist jedoch, daß die verwendete Leukoindigolösung oxidationsempfindlich ist und unter Ausschluß von Sauerstoff gehandhabt und gelagert werden muß. Zudem ist der hohe Wasserballast dieser Lösung sowohl bei der Lagerung als auch beim Transport hinderlich.

Schließlich werden in der WO-A-95/05421 Leukoindigo-Präparationen in Granulatform beschrieben, die Leukoindigo und Alkalimetallhydroxid als wesentliche Komponenten enthalten. Auch diese Granulate weisen bei längerer Lagerung an Luft insbesondere bei hoher Luftfeuchtigkeit nicht immer eine zufriedenstellende Oxidationsstabilität auf.

Weiterhin sind in der nicht vorveröffentlichten DE-A- 1 9502 968 durch Hydrosulfitzusatz stabilisierte Leukoindigo-Granulate beschrieben.

Der Erfindung lag die Aufgabe zugrunde, Leukoküpenfarbstoff-Präparationen bereitzustellen, welche die genannten Nachteile nicht aufweisen, oxidationsstabil sind und vorteilhaft zum Färben eingesetzt werden können.

Demgemäß wurden Leukoküpenfarbstoff-Präparationen in Granulatform gefunden, welche als wesentliche Bestandteile Leukoindigo oder Leukoformen von Indigoderivaten als Leukoküpenfarbstoff, Alkalimetallhydroxid und eine Mischung von 10 bis 100 Gew.-% einer $\alpha$-Hydroxy-$C_1$-$C_4$-alkylsulfinsäure, eines ihrer Salze oder Derivate und 0 bis 90 Gew.-% Hydrosulfit als Reduktionsmittel enthalten.

Außerdem wurde ein Verfahren zur Herstellung dieser Leukoküpenfarbstoff-Präparationen gefunden, welches dadurch gekennzeichnet ist, daß man eine wäßrige alkalische Lösung von Leukoindigo oder der Leukoform eines Indigoderivats und eine Lösung oder Suspension des Reduktionsmittels in Wasser und/oder einem organischen Lösungsmittel gemeinsam unter Durchmischung und unter Sauerstoffausschluß zur Trockene einengt.

Schließlich wurde ein Verfahren zum Färben von cellulosehaltigem Textilmaterial gefunden, welches dadurch gekennzeichnet ist, daß man hierfür diese Leukoküpenfarbstoff-Präparationen verwendet.

Die erfindungsgemäßen Präparationen enthalten in der Regel 20 bis 80 Gew.-%, vorzugsweise 50 bis 70 Gew.-%, Leukoindigo oder Leukoform eines Indigoderivats, 5 bis 55 Gew.-%, vorzugsweise 5 bis 20 Gew.-%, Reduktionsmittel und 3 bis 20 Gew.-%, vorzugsweise 4 bis 10 Gew.-%, Alkalimetallhydroxid.

Bevorzugte Beispiele für die indigoiden Farbstoffe sind C.I. Vat Green 9 und vor allem Indigo und Tetrabromindigo (Brillantindigo).

Als Reduktionsmittel enthalten die erfindungsgemäßen Präparationen $\alpha$-Hydroxy-$C_1$-$C_4$-alkylsulfinsäuren (im folgenden kurz Sulfinsäuren genannt), die vorzugsweise als Salze, z. B. als Erdalkalimetallsalze wie Magnesium- oder Calciumsalze, als Zinksalze oder insbesondere als Alkalimetallsalze wie Natrium- oder Kaliumsalze vorliegen, aber auch in Form anderer Derivate, z. B. der Umsetzungsprodukte mit Ammoniak wie Nitrilotrimethylsulfinsäuretrinatriumsalz, zum Einsatz kommen können.

Im einzelnen seien als bevorzugte Beispiele $\alpha$-Hydroxyethylsulfinsäure, $\alpha$-Hydroxypropylsulfinsäure und $\alpha$-Hydroxylbutylsulfinsäure und deren Natriumsalze und insbesondere Hydroxymethylsulfinsäure und Hydroxymethylsulfinsäurenatriumsalz genannt.

Selbstverständlich können auch Mischungen der Sulfinsäuren verwendet werden.

Die erfindungsgemäßen, Sulfinsäuren enthaltenden Leuoküpenfarbstoff-Präparationen zeichnen sich durch besondere Stabilität aus. Sie sind bei der Herstellung und bei der Lagerung so stabil, daß sie sowohl lange Trocknungszeiten überstehen als auch an feuchter, heißer Luft gelagert werden können (Tropentauglichkeit).

Enthalten die erfindungsgemäßen Präparationen zusätzlich Hydrosulfit als Reduktionsmittel, dann sind sie zudem besonders gut und schnell löslich (spontan löslich). Beim Handling oder beim Färben eventuell reoxidierte Anteile werden sofort rückreduziert.

Kommen Mischungen der Sulfinsäuren mit Hydrosulfit zum Einsatz, dann liegt deren Zusammensetzung bevorzugt bei 85 bis 15, besonders bevorzugt 80 bis 20 und ganz besonders bevorzugt 60 bis 40 Gew.-% Sulfinsäure und bevorzugt 15 bis 85, besonders bevorzugt 20 bis 80 und ganz besonders bevorzugt 40 bis 60 Gew.-% Hydrosulfit.

Als Alkalimetallhydroxid eignen sich insbesondere Kaliumhydroxid und vor allem Natriumhydroxid. Selbstverständlich können auch Gemische von Alkalimetallhydroxiden eingesetzt werden.

Durch das Hydroxid wird der Leukoindigo bzw. die Leukoform des Indigoderivats in die gut löslichen Alkalimetallsalze überführt. Leukoindigo bildet beispielsweise in Abhängigkeit von der Menge an Alkalimetallhydroxid das Mono- und/oder das Di-Salz.

Das Molverhältnis Leukoindigo bzw. Leukoform des Indigoderivats zu Alkalimetallhydroxid beträgt daher zweckmäßigerweise etwa 1:1 bis 1:10, vorzugsweise 1:1 bis zu dem zur Überführung aller enthaltenen freien Hydroxylgruppen in die Salzform erforderlichen Molverhältnis.

Im allgemeinen reichen zur Stabilisierung des Leukoindigos bzw. der Leukoform des Indigoderivats bei Lagerung der Granulatpräparation (Schutz vor Reoxidation) Reduktionsmittelmengen aus, die deutlich unter 50 Gew.-%, insbesondere bei maximal 25 Gew.-%, bezogen auf den Leukoindigo bzw. die Leukoform des Indigoderivats, liegen. Wählt man jedoch eine Reduktionsmittelmenge im oberen Bereich des oben für die erfindungsgemäßen Präparationen genannten Gewichtsgehaltes (etwa 40 bis 55 Gew.-%), d.h., bezogen auf den Leukoindigo bzw. die Leukoform des Indigoderivats, bis etwa 65 Gew.-% und verwendet man Sulfinsäure und Hydrosulfit als gemeinsames Reduktionsmittel, bei dem der Hydrosulfitanteil mindestens 50 Gew.-% beträgt, kann der durch den Luftkontakt während des Färbevorgangs zwangsläufig entstehende, reoxidierte Anteil des Indigos bzw. Indigoderivats direkt mitausgeglichen werden, dem Färbebad muß dann kein weiteres Reduktionsmittel mehr zugesetzt werden. Dieser Reduktionsmittelanteil kann durch geringfügige Variation an die jeweils verwendete Färbeanlage angepaßt werden.

So beträgt z.B. im Fall der besonders bevorzugten LeukoindigoPräparationen die zur Stabilisierung erforderliche Menge an dem bevorzugten Reduktionsmittelgemisch von Hydroxymethylsulfinsäurenatriumsalz und Hydrosulfit in der Regel 5 bis 30 Gew.-%, insbesondere 10 bis 20 Gew.-%, bezogen auf Leukoindigo, entsprechend einer Präparation mit einer bevorzugten Zusammensetzung von 55 bis 75 Gew.-% Leukoindigo, 10 bis 20 Gew.-% der Reduktionsmittelmischung und 10 bis 20 Gew.-% Alkalimetallhydroxid.

Mit den erfindungsgemäßen Leuoküpenfarbstoff-Präparationen wurden gut dosierbare, lagerstabile (Stabilität bei mehrwöchiger Lagerung bei 50°C unter Luftzutritt), das Färbeabwasser im Vergleich zum Einsatz des nichtreduzierten Indigos bzw. Indigoderivats deutlich geringer belastende und schnell im Färbebad lösliche Farbstoffpräparationen gefunden.

Wesentlich für die Stabilisierung des Leukoindigos bzw. der Leukoform des Indigoderivats gegen Reoxidation ist seine dauerhafte gleichmäßige Durchmischung mit dem Reduktionsmittel, die durch die erfindungsgemäße Granulatform (in der Regel liegen überwiegend kugelförmige Teilchen mit einer mittleren Teilchengröße von im allgemeinen 0,1 bis 2 mm, vorzugsweise 0,5 bis 1,5 mm, vor) gewährleistet wird.

Bei den erfindungsgemäßen Präparationen, die neben der Sulfinsäure auch Hydrosulfit enthalten, kann man den Anteil an Hydrosulfit, der nur zur Kompensation der Reoxidation beim Färben dient, auch dem durch die Reduktionsmittelmischung oder die Sulfinsäure allein bereits ausreichend stabilisierten Granulat nachträglich als Feststoff zumischen. Diese Mischungen können besonders einfach an die Erfordernisse der jeweiligen Färbeanlage angepaßt werden.

Bei der Herstellung der erfindungsgemäßen Leukoindigo-Präparationen kann man vorteilhaft die bei der Herstellung von Leukoindigo oder seinen Derivaten durch katalytische Hydrierung anfallende wäßrige Lösung nach dem Abtrennen des Katalysators direkt zur Trocknung einsetzen.

Die katalytische Hydrierung selbst kann dabei wie allgemein bekannt beispielsweise durch Reduktion eines alkalischen Indigoteigs (üblicherweise 10 bis 35 Gew.-% Indigo, 2 bis 10 Gew.-% Alkalimetallhydroxid) unter Verwendung von Raney-Nickel als Katalysator bei einem Wasserstoffdruck von im allgemeinen 2 bis 10 bar und einer Temperatur von in der Regel 60 bis 90°C erfolgt sein.

Die erhaltenen Leukoindigolösungen enthalten in der Regel 10 bis 35, bevorzugt 15 bis 30 und besonders bevorzugt 20 bis 25 Gew. -% Leukoindigo.

Beim erfindungsgemäßen Herstellungsverfahren werden die alkalischen Lösungen von Leukoindigo oder der Leukoform eines Indigoderivats gemeinsam mit einer Lösung oder Suspension des gewählten Reduktionsmittels in Wasser und/oder einem organischen Lösungsmittel unter Sauerstoffausschluß, vorteilhaft nach Inertisierung mit einem Schutzgas wie Stickstoff, und unter Durchmischung zur Trockene eingeengt.

Bevorzugt mischt man die Lösung von Leukoindigo oder der Leukoform eines Indigoderivats und die Reduktionsmittellösung (bzw. -suspension) vor oder während des Trocknungsvorgangs, man kann das Reduktionsmittel aber auch direkt als Feststoff der Lösung von Leukoindigo oder der Leukoform eines Indigoderivats zusetzen.

Als organische Lösungsmittel kommen zur Herstellung der Reduktionsmittellösung bzw. -suspension insbesondere mit Wasser mischbare Lösungsmittel in Betracht. Als bevorzugte Beispiele seien $C_1$-$C_4$-Alkohole, vor allem Methanol, sowie Glykole, insbesondere Ethylenglykol, und Glykolether genannt, die selbstverständlich auch in Form von Gemischen eingesetzt werden können.

Eine weitere interessante Verfahrensvariante besteht darin, die Sulfinsäure bzw. deren Salz in situ bei der Trocknung der Lösung von Leukoindigo oder der Leukoform eines Indigoderivats herzustellen.

Das kann in einfacher Weise geschehen, indem Hydrosulfit, der entsprechende $C_1$-$C_4$-Aldehyd (Mono- oder Dialdehyd) wie Formaldehyd, Glyoxal, Acetaldehyd, Propionaldehyd, Malondialdehyd, Butyraldehyd oder Succindialdehyd und Alkalimetallhydroxid der Lösung von Leukoindigo oder der Leukoform eines Indigoderivats in geeigneten Mengenverhältnissen zugesetzt werden.

Die bei der Trocknung ablaufende Reaktion soll am Beispiel der bevorzugten Hydroxymethylsulfinsäure mit Hilfe folgender Reaktionsgleichung verdeutlicht werden:

$$Na_2S_2O_4 + HCHO + NaOH \rightarrow HOCH_2SO_2Na + Na_2SO_3$$

Gibt man weniger als die stöchiometrisch erforderliche Menge an Aldehyd zu, dann enthält die nach der Trocknung vorliegende Präparation Sulfinsäure und Hydrosulfit als Reduktionsmittel.

Die für die Trocknung erforderliche Produkttemperatur richtet sich danach, ob unter vermindertem Druck gearbeitet wird oder nicht und beträgt üblicherweise 50 bis 90°C bzw. 105 bis 130°C.

Während des Trocknungsprozesses muß eine Durchmischung der flüssigen Phase und des anfallenden Feststoffes gewährleistet sein.

Für den großtechnischen Maßstab geeignete Apparate sind daher z.B. Taumeltrockner, Schaufeltrockner und zwangsgereinigte Kontakttrockner, in denen die Trocknung vorzugsweise unter vermindertem Druck (etwa 10 bis 500 mbar) vorgenommen wird. In der Regel empfiehlt es sich, an die eigentliche Trocknung eine Nachtrocknungszeit von etwa 1 bis 2 h bei der jeweils gewählten Trocknungstemperatur anzuschließen. Gegebenenfalls kann eine zusätzliche Grobzerkleinerung im oder außerhalb des Trocknungsapparats vorgenommen werden.

Das erfindungsgemäße Verfahren kann vorteilhaft auch in einer Sprühtrocknungsanlage wie einem Sprühturm und besonders einem Sprühwirbelbett durchgeführt werden, bei dem das Wasser unter Begasung mit heißem Inertgas, bevorzugt Stickstoff, verdampft wird. Das getrocknete Produkt kann hier direkt in der gewünschten Teilchengröße erhalten werden.

Es empfiehlt sich, das getrocknete Produkt vor dem Austrag auf eine Temperatur von in der Regel < 50°C abzukühlen, um eine Reoxidation im heißen Zustand zu vermeiden.

Mit Hilfe des erfindungsgemäßen Verfahrens können die neuen Leukoküpenfarbstoff-Präparationen in Granulatform auf einfache Weise kontinuierlich hergestellt werden. Im allgemeinen enthalten die getrockneten Produkte nur einen geringen Anteil (etwa < 4 Gew.-%) an nichtreduziertem Indigo bzw. Indigoderivat.

Die erfindungsgemäßen Leukoküpenfarbstoff-Präparationen eignen sich vorteilhaft zum Färben von cellulosehaltigem Textilmaterial. Die erhaltenen Färbungen entsprechen vollkommen den Anforderungen. Die Abwasserbelastung mit schwefelhaltigen anorganischen Verbindungen wird im Vergleich zur Verwendung nichtreduzierter Farbstoffe drastisch reduziert. In Abhängigkeit von der gewählten Zusammensetzung der Leukoküpenfarbstoff-Präparation kann das Färben auch ohne weiteren Zusatz an Reduktionsmittel zum Färbebad erfolgen.

Beispiele

A) Herstellung von erfindungsgemäßen Leukoindigo-Präparationen

Beispiel 1

Eine Lösung aus 21 Gew.-% Leukoindigo (ber. als freie Säure), 4 Gew.-% Natriumhydroxid, 1,85 Gew.-% Hydroxymethylsulfinsäurenatriumsalz (99 %ig), 1,85 Gew.-% Hydrosulfit (ber. 100 %) und 71,3 Gew.-% Wasser wurde langsam in einen mit Stickstoff inertisierten und auf eine Ölbadtemperatur von 120°C aufgeheizten Rotationsverdampfer bei einem Vakuum von 10 mbar eingeleitet und bei einer Umdrehungszahl von 70 U/min zur Trockene eingeengt. Nach einer Nachtrocknungszeit von 2 h bei den angegebenen Bedingungen wurde auf < 40°C abgekühlt.
Das erhaltene Granulat hatte nach einer Grobzerkleinerung einen mittleren Teilchendurchmesser von 2 mm. Durch Extraktion mit Wasser im Soxleth wurde ein wasserunlöslicher Anteil (Nebenprodukte und reoxidierter Indigo) von < 1 Gew.-% bestimmt. Das Granulat enthielt ca. 72,4 Gew.-% Leukoindigo, 4,3 Gew.-% Hydroxymethylsulfinsäurenatriumsalz, 4,3 Gew.-% Hydrosulfit und 13,8 Gew.-% Natriumhydroxid.

Beispiel 2

Eine Lösung aus 22 Gew.-% Leukoindigo (ber. als freie Säure), 7 Gew.-% Natriumhydroxid, 4 Gew.-% Hydrosulfit (87 %ig) und 1,9 Gew.-% Formaldehyd in Form einer 30 gew.-%igen wäßrigen Lösung wurde analog Beispiel 1 getrocknet.
Das erhaltene Granulat hatte nach Grobzerkleinerung einen mittleren Teilchendurchmesser von 1,5 mm. Durch Extraktion mit Wasser im Soxleth wurde ein wasserunlöslicher Anteil von < 4 Gew.-% bestimmt. Das Granulat enthielt ca. 64 Gew.-% Leukoindigo, 7 Gew.-% Hydroxymethylsulfinsäurenatriumsalz, 7 Gew.-% Natriumsulfit und 20 Gew.-% Natriumhydroxid.

Beispiel 3

Eine Lösung aus 21 Gew.-% Leukoindigo (ber. als freie Säure), 4,5 Gew.-% Natriumhydroxid und 74,5 Gew.-% Wasser wurde 3,2 Gew.-% Nitrilotrimethylsulfinsäure (ber. 100 % als 20 gew.-%ige wäßrige Lösung) versetzt und dann analog Beispiel 1 getrocknet.
Das erhaltene Granulat hatte nach Grobzerkleinerung einen mittleren Teilchendurchmesser von 1,5 mm. Durch Extraktion mit Wasser im Soxleth wurde ein wasserunlöslicher Anteil von etwa 4 Gew.-% bestimmt. Das Granulat enthielt ca. 73 Gew.-% Leukoindigo, 11 Gew.-% Nitrilotrimethansulfinsäure und 15 Gew.-% Natriumhydroxid.

Beispiel 4

Eine Lösung aus 22 Gew.-% Leukoindigo (ber. als freie Säure), 5 Gew.-% Natriumhydroxid, 3,3 Gew.-% Hydroxymethylsulfinsäurenatriumsalz (99 %ig) und 69,7 Gew.-% Wasser wurde analog Beispiel 1 getrocknet.
Das Granulat hatte nach einer Grobzerkleinerung einen mittleren Teilchendurchmesser von 1,5 mm. Durch Extraktion mit Wasser im Soxleth wurde ein wasserunlöslicher Anteil von < 1 Gew.-% bestimmt. Das Granulat enthielt ca. 71 Gew.-% Leukoindigo, 10,5 Gew.-% Hydroxymethylsulfinsäurenatriumsalz und 16,5 Gew.-% Natriumhydroxid.

B) Färben mit erfindungsgemäßen Leukoindigo-Präparationen

Beispiel 5

Zum Färben wurde eine übliche Indigofärbeanlage mit nur einem Bad von 2000 1 Flottenvolumen, viermaligem Tauchen und Oxidieren (4 Züge) verwendet. Der Garndurchsatz an rohem Baumwollgarn Nm 12 und 4000 Fäden betrug 600 kg/h. Der fixierte Indigogehalt lag bei 1,8 %.
Bei diesen Produktionsbedingungen (Standard) wurde das Leukoindigo-Granulat aus Beispiel 1 und in einem weiteren Färbeversuch das Leukoindigo-Granulat aus Beispiel 2 während der Versuchsdauer von 8 h zur Einhaltung der bereits eingesetzten stationären (konstanten) Bedingungen kontinuierlich mit 23,5 kg/h in das Färbebad einrieseln gelassen. Zusätzliches Reduktionsmittel und Base mußten nur in der Hälfte der für das Standardfärben mit unverküptem Farbstoff benötigten Menge eingesetzt werden.
Das gefärbte Garn zeigte gleiche Nuance, Farbtiefe und Echtheit wie ein auf herkömmliche Weise unter ständigem Zusatz von

65 kg/h Leukoindigolösung 20 %ig (ber. als freie Säure)
4 kg/h Hydrosulfit 88 %ig
15 l /h Natronlauge 38°Bé

gefärbtes Garn.

## Patentansprüche

1. Leukoküpenfarbstoff-Paräparationen in Granulatform, enthaltend als wesentliche Bestandteile Leukoindigo oder Leukoformen von Indigoderivaten als Leukoküpenfarbstoff, Alkalimetallhydroxid und eine Mischung von 10 bis 100 Gew.-% einer $\alpha$-Hydroxy-$C_1$-$C_4$-alkylsulfinsäure, eines ihrer Salze oder Derivate und 0 bis 90 Gew.-% Hydrosulfit als Reduktionsmittel.

2. Präparationen nach Anspruch 1, die 20 bis 80 Gew.-% Leukoindigo oder Leukoform eines Indigoderivats, 3 bis 20 Gew.-% Alkalimetallhydroxid und 5 bis 55 Gew.-% Reduktionsmittel enthalten.

3. Präparationen nach Anspruch 1 oder 2, die als $\alpha$-Hydroxy-$C_1$-$C_4$-alkylsulfinsäure Hydroxymethylsulfinsäure oder deren Salze enthalten.

4. Verfahren zur Herstellung von Leukoküpenfarbstoff-Präparationen gemäß den Ansprüchen 1 bis 3, **dadurch gekennzeichnet, daß** man eine wäßrige alkalische Lösung von Leukoindigo oder der Leukoform eines Indigoderivats und eine Lösung oder Suspension des Reduktionsmittels in Wasser und/oder einem organischen Lösungsmittel gemeinsam unter Durchmischung und unter Sauerstoffausschluß zur Trockene einengt.

5. Verfahren nach Anspruch 4, **dadurch gekennzeichnet, daß** man es unter Inertgasatmosphäre und/oder Vakuum durchführt.

6. Verfahren nach Anspruch 4 oder 5, **dadurch gekennzeichnet, daß** man die Leukoindigolösung mit Hydrosulfit, einem $C_1$-$C_4$-Aldehyd, zusätzlichem Alkalimetallhydroxid und Wasser mischt und die $\alpha$-Hydroxy-$C_1$-$C_4$-alkylsulfinsäure in situ bei der Trocknung herstellt.

7. Verfahren nach den Ansprüchen 4 bis 6, **dadurch gekennzeichnet, daß** man es in einer Sprühtrocknungsanlage durchführt.

8. Verfahren zum Färben von cellulosehaltigem Textilmaterial, **dadurch gekennzeichnet, daß** man hierfür Leukoküpenfarbstoff-Präparationen gemäß den Ansprüchen 1 bis 3 verwendet.

## Claims

1. Leuco vat dye preparations in granule form comprising as essential constituents leuco indigo or a leuco form of an indigo derivative as leuco vat dye, an alkali metal hydroxide and a mixture of from 10 to 100 % by weight of an $\alpha$-hydroxy-$C_1$-$C_4$-alkylsulfinic acid, one of its salts or derivatives and from 0 to 90 % by weight of hydrosulfite as reductant.

2. Preparations as claimed in claim 1, comprising from 20 to 80 % by weight of leuco indigo or a leuco form of an indigo derivative, from 3 to 20 % by weight of alkali metal hydroxide and from 5 to 55 % by weight of reductant.

3. Preparations as claimed in claim 1 or 2, wherein the $\alpha$-hydroxy-$C_1$-$C_4$-alkylsulfinic acid is hydroxymethylsulfinic acid or a salt thereof.

4. A process for forming leuco vat dye preparations as claimed in any of claims 1 to 3, which comprises jointly concentrating an aqueous alkaline solution of leuco indigo or the leuco form of a leuco indigo derivative and a solution or suspension of the reductant in water and/or an organic solvent to dryness by thorough mixing in the absence of oxygen.

**5.** A process as claimed in claim 4 in an inert gas atmosphere and/or under reduced pressure.

**6.** A process as claimed in claim 4 or 5, wherein the leuco indigo solution is mixed with hydrosulfite, a $C_1$-$C_4$-aldehyde, additional alkali metal hydroxide and water and the $\alpha$-hydroxy-$C_1$-$C_4$-alkylsulfinic acid is prepared in situ in the course of the drying.

**7.** A process as claimed in any of claims 4 to 6 in a spray dryer.

**8.** A process for dyeing cellulosic textile material, which comprises dyeing with leuco vat dye preparations as claimed in any of claims 1 to 3.

**Revendications**

**1.** Préparations de leucodérivés de colorants de cuve sous forme granulaire, contenant comme composants essentiels un leucodérivé d'indigo ou des leucodérivés de dérivés d'indigo, en tant que leucodérivé de colorant de cuve, un hydroxyde de métal alcalin et un mélange de 10 à 100% en poids d'un acide $\alpha$-hydroxyalkyl($C_1$-$C_4$)sulfinique, d'un de ses sels ou dérivés, et de 0 à 90% en poids d'hydrosulfite en tant que réducteur.

**2.** Préparations selon la revendication 1, qui contiennent de 20 à 80% en poids de leucodérivé d'indigo ou de leucodérivé d'un dérivé d'indigo, de 3 à 20% en poids d'un hydroxyde de métal alcalin et de 5 à 55% en poids de réducteur.

**3.** Préparations selon la revendication 1 ou 2, qui contiennent, en tant qu'acide $\alpha$-hydroxyalkyl$C_1$-$C_4$)sulfinique, de l'acide hydroxyméthylsulfinique ou ses sels.

**4.** Procédé pour la préparation de préparations de leucodérivés de colorants de cuve selon les revendications 1 à 3, **caractérisé en ce qu'**on concentre à siccité une solution aqueuse alcaline de leucodérivé d'indigo ou du leucodérivé d'un dérivé d'indigo et une solution ou suspension du réducteur dans de l'eau et/ou un solvant organique, ensemble avec homogénéisation et à l'abri de l'oxygène.

**5.** Procédé selon la revendication 4, **caractérisé en ce qu'**on l'effectue sous une atmosphère constituée par un gaz inerte et/ou sous vide.

**6.** Procédé selon la revendication 4 ou 5, **caractérisé en ce qu'**on mélange la solution de leucodérivé d'indigo avec de l'hydrosulfite, un aldéhyde en $C_1$-$C_4$, un hydroxyde de métal alcalin supplémentaire et de l'eau, et on prépare l'acide $\alpha$-hydroxyalkyl($C_1$-$C_4$)sulfinique in situ lors du séchage.

**7.** Procédé selon les revendications 4 à 6, **caractérisé en ce qu'**on l'effectue dans une installation de séchage par atomisation.

**8.** Procédé pour la teinture de matériau textile contenant de la cellulose, **caractérisé en ce qu'**on utilise à cet effet des préparations de leucodérivés de colorants de cuve selon les revendications 1 à 3.